# EUROPEAN PATENT APPLICATION

(11) **EP 0 810 187 A1**
(43) Date of publication of application: **03.12.1997**
(21) Application number: 97400551.4
(22) Date of filing: 13.03.1997
(51) Int. Cl.: C04B 24/26, C04B 24/42

(54) **Modifiers for water-setting inorganic compositions and modified water-setting inorganic compositions**

(30) Priority: 31.05.1996 JP 137928/96
(71) Applicant: ELF ATOCHEM S.A., 92800 Puteaux (FR)
(72) Inventor: Maillet, Jerome, Elf Atochem Japan, Chudoji, Shimogyo-Ku, Kyoto 600 (JP); Miyaki, Yoshiyuki, Elf Atochem Japan, Chudoji, Shimogyo-Ku, Kyoto 600 (JP); Komornicki, Jacques, Elf Atochem Japan, Chudoji, Shimogyo-Ku, Kyoto 600 (JP)

(57) **Abstract**

This invention shows a method for improving water-proofing property of water-setting inorganic compositions such as plaster.

The modifier is prepared by emulsifying (A) a copolymer of a vinyl monomer and unsaturated dicaboxylic acid (or anhydride) having an acid number of 200 - 400 mg KOH/g (SMA 2000 or 3000) and (B) organopolysiloxane or its derivatives into water by use of alkali compounds, where the ratio of (A) / (B) is in the range from 20/1 to 1/20.

The modified water-setting inorganic compositions of claim contain (A) + (B) at 0.01∼20 wt-%.

## Description

### [Detailed description of the invention]

### [Field of industrial application]

The present invention relates to modifiers for the improvement of waterproof properties, mechanical properties and operability of water-setting inorganic compositions such as gypsum during construction and relates to water-setting inorganic compositions having improved waterproof properties. The water-setting inorganic compositions obtained by the present invention are useful as civil engineering or construction materials.

### [The prior art]

With regard to examples of inorganic compositions which are set by the addition of water, there are those prepared from lime as the starting material and those prepared from lime and silicate as the starting materials. With regard to their set compounds, various kinds of concrete, mortars, calcium silicate boards, gypsums, etc. can be cited. These have been prepared by a high-pressure steam regime, atmospheric pressure steam regime, warm moisture regime, dry air regime, etc. and have been used as civil engineering materials, civil engineering blocks, construction panels, tiles, roof tiles, thermal insulators, soundproofing materials, heat insulating materials, etc.

However, since these inorganic compositions are largely hydrophilic there have been problems such as degradation in their thermal insulation and heat retaining properties, generation of cracks and changes in size, etc. due to water absorption.

There have been various proposals to eliminate such defects of inorganic compositions. For example, in the case of gypsums, water-repellent additives which have been used are paraffin and oxidised paraffin (Japanese Examined Patent 55-50906), waxes and waxes containing carboxyl groups (Japanese Unexamined Patent 55-37423), low molecular weight polyolefins and paraffin together with aqueous solutions of protective colloids which are prepared using monomethyl esters of styrene-maleic acid copolymers (Japanese Examined Patent 58-58304 and Japanese Unexamined Patent 55-94983), low molecular weight polyolefins and paraffin together with aqueous solutions of protective colloids which are prepared using a-olefin-maleic anhydride copolymers (Japanese Unexamined Patent 60-220910), and mixtures of waxes, petroleum resins, ethylene-vinyl acetate copolymers and vinyl compounds-maleic anhydride derivatives (Japanese Unexamined Patent 4-304268).

Further, there are the following inventions in which silicone is added to inorganic compositions as the water-repellent. There are disclosed a method using emulsions of dimethylpolysiloxane prepared by emulsification with anionic surfactants (Japanese Examined Patent 01-35790), moulds prepared by directly adding silicone oil, moulding and drying (Japanese Examined Patent 02-15511), compositions containing organopolysiloxane having hydrolysable groups (Japanese Unexamined Patent 02-160651), a method in which alkali salts of silicone polymers are mixed (Japanese Examined Patent 56-6380) and a method in which siloxane containing hydrogen and high molecular weight silicone are added (Japanese Unexamined Patent 06-234580).

However, in these methods there are problems with emulsion stability or in that when immersing inorganic composition products in water for long periods, satisfactory water-repellent properties cannot be obtained.

### [Problems to be solved by the invention]

The objective of the present invention is to eliminate the above-mentioned defects of water-setting inorganic compositions in the art and to provide water-setting inorganic compositions having good operability during construction work and improved water-repellent properties.

### [Means to Solve the Problems]

As a result of intensive investigation by the present inventors, the present invention has been accomplished by finding that the water-repellent properties of water-setting inorganic compositions can be readily improved by using modifiers prepared by emulsifying (A) copolymers of vinyl compounds and unsaturated dicarboxylic acids or anhydrides thereof and (B) at least one kind of polymer chosen from organopolysiloxanes and derivatives thereof with water in the presence of alkaline compounds.

That is, the present invention relates to modifiers for water-setting inorganic compositions prepared by emulsifying (A) copolymers of vinyl compounds and unsaturated dicarboxylic acids or anhydrides thereof and (B) organopolysiloxanes with water in the presence of water-soluble alkaline compounds, where the ratio by weight of (A) to (B) is in the range 20:1 to 1:20 and water-setting inorganic compositions having improved water-repellent properties prepared therefrom.

The vinyl compounds which are one component of the copolymers of vinyl compounds and unsaturated dicarboxylic acids or anhydrides thereof include a-olefins having 2~8 carbons such as ethylene, propylene, butene, isobutylene, isoamylene and n-hexene, and preferably a-olefins having 4∼6 carbons, or aromatic vinyl compounds and derivatives thereof such as styrene, a-methylstyrene, vinyltoluene, t-butylstyrene and chlorostyrene. Further, the unsaturated dicarboxylic acids or anhydrides thereof include maleic acid, maleic anhydride, fumaric acid, etc. Such monomers are polymerised under standard conditions for radical polymerisation.

It is desirable for the acid number (number of mg of potassium hydroxide necessary to neutralise 1 g of resin) of these copolymers of vinyl compounds and unsaturated dicarboxylic anhydrides to be in the range 200 to 400. The acid number of the copolymers can be controlled by the ratio of the monomers, but it may also be adjusted after copolymerisation by partial esterification, partial amidation or partial imidation of the carboxylic acid parts. When the acid number exceeds 400, the water-repellent properties of the water-setting inorganic compositions are inadequate, and when it is 200 or less, it becomes difficult to obtain uniform aqueous solutions.

Further, with regard to monomers copolymerisable with the above-mentioned monomers, there are cyanovinyl compounds such as acrylonitrile and methacrylonitrile, acrylic esters such as methyl acrylate, ethyl acrylate and butyl acrylate, methacrylic esters such as methyl methacrylate, ethyl methacrylate and butyl methacrylate, vinyl carboxylic acids such as acrylic acid and methacrylic acid, acrylic amides, methacrylic amides, acenaphthylene, *N*-vinylcarbazole, etc.

In the present invention, copolymers prepared from styrene or derivatives thereof and maleic anhydride are particularly preferably used. In this case, it is desirable for the molar ratio of styrene or derivatives thereof to maleic anhydride which constitute the copolymers to be in the range 2:1 to 4:1.

With regard to the derivatives of organosiloxanes for use in the present invention, those having a viscosity at 25°C of 0.5 ∼ 10⁶ centistokes, and preferably 10 ∼ 10⁴ centistokes, are usually used.

Examples of the derivatives of organopolysiloxanes include methyl phenyl polysiloxane in which a proportion of the methyl groups of dimethyl polysiloxane has been substituted with phenyl groups (Shinetsu Kagaku Kogyo K.K., KF54, etc.), methyl hydrogen polysiloxane in which a proportion of the methyl groups of dimethyl polysiloxane has been substituted with hydrogen (Shinetsu Kagaku Kogyo K. K., KF99, etc.), denatured dimethylpolysiloxanes having at least one substituent chosen from the group comprising hydroxyl groups, amino groups, carboxyl groups, epoxy groups, alkoxy groups, polyether groups, mercapto groups, phenolic groups and methacrylic groups at both ends or in their molecular structures.

Further, alkaline compounds for use in the present invention are chosen from alkali metal hydroxides such as lithium hydroxide, sodium hydroxide and potassium hydroxide, alkali metal carbonates such as sodium carbonate and potassium carbonate, amines such as ammonia, ammonium hydroxide, dimethylamine, trimethylamine and triethylamine and alkanolamines such as 2-aminoethanol, triethanolamine, diethanolamine, *N,N*-dimethyl ethanolamine, *N*-methyl diethanolamine and 2-amino-2-methyl-1-propanol. These may be used singly or as combinations of 2 or more kinds. In particular, alkanolamines are preferably used in the present invention.

The starting materials comprising (A) copolymers of vinyl compounds and unsaturated dicarboxylic acids or anhydrides thereof and (B) at least one kind of compound chosen from organopolysiloxanes and derivatives thereof are emulsified in water in the presence of the above-mentioned alkaline compounds and used as modifiers. Here, it is desirable for the ratio by weight of (A) and (B) to be in the range 5 to 2000 of (B) relative to 100 of (A). In addition, the alkaline compounds are usually used in the range 0.5 to 1.5 equivalents of the carboxyl groups of (A), and preferably in the range 0.8 to 1.2 equivalents. The total concentration of modifier components in the emulsions is usually in the range 0.1 to 15 wt%.

In this case, (A) and the alkaline compounds may be mixed in advance, if necessary with heating, to give a uniform solution or dispersion and (B) may then be added thereto, or (A), (B) and the alkaline compounds may be mixed at the same time.

By mixing the emulsion so obtained with water-setting inorganic compositions or a mixture of water-setting inorganic compositions and water and kneading, slurries of water-setting inorganic compositions can be obtained. After setting, by drying if necessary, water-setting inorganic composition products having superior waterproof properties can be obtained. Here, it is desirable for the amount of modifiers expressed as the total of starting materials (A) and (B) to be in the range 0.01 to 20 wt% relative to the final water-setting inorganic compositions, and preferably in the range 0.1 to 10 wt%. When the amount of modifiers is below this range an adequate modification effect cannot be obtained, and when it is above this range the mechanical strength , fire proofing and economic merits of the water-setting inorganic compositions might be lost.

The modifiers of the present invention can be applied to various kinds of inorganic compositions which are set by the addition of water. With regard to examples of the inorganic compositions, there are those comprising lime starting materials or lime starting materials and silicate starting materials, and gypsum, plaster, lime, sandstone, cement, brick, slagbrick, etc. can be cited. With regard to set compounds thereof, various kinds of concrete, mortar, calcium silicate boards, gypsum boards, etc. can be cited.

The gypsums particularly suitable for use in the present invention include natural gypsum, chemical gypsum, a- and b-hemihydrate gypsums which can be obtained by calcining degassed and desulphurised gypsums and = type anhydrous gypsum.

Further, if necessary, reinforcing materials such as perlite and vermiculite, aggregation rate controllers, strengthening fibres, forming agents, surfactants, and denaturing agents such as slags and fly ash can be used together with the water-setting inorganic compositions.

Below, the present invention is explained by reference to examples, but the present invention is in no way limited thereby.

### [Embodiments]

In the examples and comparative examples below, gypsum compositions (slurries) were made into gypsum boards by pouring between gypsum board papers and drying at 75°C for about 15 hours. After allowing these gypsum boards to stand at room temperature and 50% humidity for 24 hours, water absorption rates were measured. The water absorption rates were calculated using the weight increase after immersion in water at 20°C for 24 hours.

### [Example 1]

270 g of water was added to 30 g of a styrene-maleic anhydride copolymer in which the molar ratio of styrene to maleic anhydride was 3:1, the acid number was 275, the melting point was 120°C and the Tg was 125°C; whilst stirring 13.4 g (1.02 equivalents) of *N,N*-dimethyl ethanolamine (DMEA) was slowly added dropwise and the mixture was heated to 90°C and stirred until a uniform aqueous solution was obtained. After the solids had dissolved, the aqueous solution was cooled to room temperature and water was added so as to make the total volume 1000 ml. 27 g of dimethyl polysiloxane (Shinetsu Kagaku Kogyo K.K., KF96-100) and water were added to 300 ml of this solution to make the total 360 g and the mixture was stirred at 70°C and 4000 rpm for 30 minutes using a homomixer to give an emulsion in which the total concentration of modifier components was 10 wt% and the ratio of styrene-maleic anhydride copolymer to dimethyl polysiloxane was 3:1.

After diluting 20.7 g of the emulsion by adding 190 g of water, 350 g of calcined gypsum (b-hemihydrate gypsum, purity: 97% or higher) was mixed in to give a gypsum composition (slurry). The water absorption rate of a gypsum board made from this slurry was 2.1 %.

### [Example 2]

After diluting 83 g of the emulsion obtained in Example 1 by adding 127 g of water, 350 g of calcined gypsum (b-hemihydrate gypsum, purity: 97% or higher) was mixed in to give a gypsum composition (slurry). The water absorption rate of a gypsum board made from this slurry was 1.4%.

### [Example 3]

270 g of water was added to 90 g of the same styrene-maleic anhydride copolymer as that used in Example 1; whilst stirring 40.2 g (1.02 equivalents) of *N,N*-dimethyl ethanolamine (DMEA) was slowly added dropwise and the mixture was heated to 90°C and stirred until a uniform aqueous solution was obtained. After the solids had dissolved, the aqueous solution was cooled to room temperature and water was added so as to make the total volume 1000 ml. 3 g of dimethyl polysiloxane (Shinetsu Kagaku Kogyo K.K., KF96-100) and water were added to 300 ml of this solution to make the total 360 g and the mixture was stirred at 70°C and 4000 rpm for 30 minutes using a homomixer to give an emulsion in which the total concentration of modifier components added was 10 wt% and the ratio of styrene-maleic anhydride copolymer to dimethyl polysiloxane was 3:1.

After diluting 83 g of this emulsion by adding 127 g of water, 350 g of calcined gypsum (b- hemihydrate gypsum, purity: 97% or higher) was mixed in to give a gypsum composition (slurry). The water absorption rate of a gypsum board made from this slurry was 2.3%.

### [Example 4]

The procedure of Example 1 was repeated except that methyl hydrogen polysiloxane (Shinetsu Kagaku Kogyo K.K., KF99, etc.) was used instead of dimethyl polysiloxane to give an emulsion. After diluting 20.7 g of this emulsion by adding 190 g of water, 350 g of calcined gypsum (b-hemihydrate gypsum, purity: 97% or higher) was mixed in to give a gypsum composition (slurry). The water absorption rate of a gypsum board made from this slurry was 1.8%.

### [Comparative Example 1]

The procedure of Example 1 was repeated except that a gypsum board was made without using modifiers and the water absorption rate thereof was 33%.

### [Comparative Example 2]

The procedure of Example 1 was repeated except that paraffin having a melting point of 57°C was used instead of dimethyl polysiloxane to give an emulsion. After diluting 41 g of this emulsion by adding 169 g of water, 350 g of calcined gypsum (b- hemihydrate gypsum, purity: 97% or higher) was mixed in to give a gypsum composition (slurry). The water absorption rate of a gypsum board made from this slurry was 9%.

### [Comparative Example 3]

270 g of water was added to 90 g of a styrene-maleic anhydride copolymer in which the molar ratio of styrene to maleic anhydride was 1:1, the acid number was 550, the melting point was 160°C and the Tg was 154°C; whilst stirring 60.9 g (1.02 equivalents) of *N,N*-dimethyl ethanolamine (DMEA) was slowly added dropwise and the mixture was heated to 90°C and stirred until a uniform aqueous solution was obtained. After the solids had dissolved, the aqueous solution was cooled to room temperature and water was added so as to make the total volume 1000 ml. 3 g of dimethyl polysiloxane (Shinetsu Kagaku Kogyo K.K., KF96-50) and water were added to 300 ml of this solution to make the total 360 g and the mixture was stirred at 70°C and 4000 rpm for 30 minutes using a homomixer to give an emulsion in which the total concentration of modifier components was 10 wt% and the ratio of styrene-maleic anhydride copolymer to dimethyl polysiloxane was 3:1.

After diluting 83 g of the emulsion by adding 127 g of water, 350 g of calcined gypsum (b-hemihydrate gypsum, purity: 97% or higher) was mixed in to give a gypsum composition (slurry). An attempt was made to make a gypsum board using this slurry by the above-mentioned method, but the slurry did not set and it was impossible to make a gypsum board.

### [Effects of the invention]

In accordance with the present invention, in comparison with the use of water-repellent emulsion compositions in the art, the waterproof properties of water-setting inorganic compositions can be improved. The water-setting inorganic compositions obtained by use of the modifiers of the present invention can be expected to be used as outdoor civil engineering materials or as construction materials for wet places such as bathrooms, washrooms and kitchens.

## Claims

1. A modifier for water-setting inorganic compositions prepared by emulsifying (A) copolymers of vinyl compounds and unsaturated dicarboxylic acids or anhydrides thereof having acid numbers of 200 ∼ 400 and (B) at least one kind of polymer chosen from organopolysiloxanes and derivatives thereof in water in the presence of alkaline compounds, where the ratio by weight of (A) to (B) is in the range 20:1 to 1:20.

2. A modifier for water-setting inorganic compositions according to claim 1 in which the copolymers are prepared from styrene or derivatives thereof and maleic anhydride, where the molar ratio of styrene or derivatives thereof to maleic anhydride is in the range 2:1 to 4:1.

3. A modifier for water-setting inorganic compositions according to claim 1 in which the alkaline compounds are one or more kinds of compound chosen from the group comprising sodium hydroxide, potassium hydroxide, ammonia, ammonium hydroxide and alkanolamines.

4. A modifier for water-setting inorganic compositions according to claim 3 in which the alkanolamines are one or more kinds of compound chosen from the group comprising 2-aminoethanol, triethanolamine, diethanolamine, *N,N*-dimethyl ethanolamine, *N*-methyl diethanolamine and 2-amino-2-methyl-1-propanol.

5. A modifier for water-setting inorganic compositions according to any one of claims 1 ~ 4 in which the water-setting inorganic compositions are gypsums.

6. A water-setting inorganic composition prepared by mixing and kneading (A) partially or completely neutralised copolymers of vinyl compounds and unsaturated dicarboxylic acids or anhydrides thereof having acid numbers of 200 ~ 400, (B) at least one kind of polymer chosen from organopolysiloxanes and derivatives thereof and (C) a water-setting inorganic composition, where the ratio by weight of (A) to (B) is in the range 20:1 to 1:20 and the ratio of the total amount of (A) and (B) relative to the water-setting inorganic composition is in the range 0.01 to 20 wt%.

7. A water-setting inorganic composition according to claim 6 in which the copolymers are prepared from styrene or derivatives thereof and maleic anhydride, where the molar ratio of styrene or derivatives thereof to maleic anhydride is in the range 2:1 to 4:1.

8. A water-setting inorganic composition according to claim 7 in which the copolymers are neutralised by one or more kinds of alkaline compound chosen from the group comprising sodium hydroxide, potassium hydroxide, ammonia, ammonium hydroxide and alkanolamines.

9. A water-setting inorganic composition according to claim 8 in which the alkanolamines are one or more kinds of compound chosen from the group comprising 2-aminoethanol, triethanolamine, diethanolamine, *N,N*-dimethyl ethanolamine, *N*-methyl diethanolamine and 2-amino-2-methyl-1-propanol.

10. A water-setting inorganic composition according to any one of claims 6 ∼ 9 in which the water-setting inorganic composition is a gypsum.
